# EUROPEAN PATENT APPLICATION

(11) **EP 4 480 317 A1**
(43) Date of publication of application: **25.12.2024**
(21) Application number: 23756383.8
(22) Date of filing: 15.02.2023
(51) Int. Cl.: A23D 9/00, A23L 13/00

(54) **OIL OR FAT COMPOSITION FOR RICH FLAVOR ENHANCEMENT**

(30) Priority: 17.02.2022 JP 2022023220
(71) Applicant: ADEKA CORPORATION, Arakawa-ku Tokyo 116-8554 (JP)
(72) Inventor: INOUE, Keita, Tokyo 116-8554 (JP)
(74) Representative: Hoffmann Eitle
(86) International application number: PCT/JP2023/005151
(87) International publication number: WO 2023/157858

(57) **Abstract**

Provided is a fat and oil composition, for rich taste enhancement, that can achieve the following matters (1) and (2) :
(1) the composition can be used irrespective of a food or beverage to be applied, and has good workability; and
(2) the composition can improve the rich taste of a food or beverage.

The fat and oil composition for rich taste enhancement contains any one or more of the following fats and oils (A) to (C), and has a ratio SFC-25/SFC-35 of a solid fat content at 25°C (SFC-25) (%) relative to a solid fat content at 35°C (SFC-35) (%) of 2.2 to 80:
(A) a cocoa butter,
(B) a shea butter, and
(C) a fractionated oil of a shea butter.

## Description

### TECHNICAL FIELD

The present invention relates to a fat and oil composition for rich taste enhancement.

### BACKGROUND ART

One of the demands for foods and beverages in the market is for a rich taste to be felt when these are eaten. There is a tendency for a food or beverage that exhibits a richer teste to be more highly regarded in the market. It is noted that a rich taste means the continuity and spreading of a taste that determines the property of a food or beverage.

Examples of a food or beverage for which a strong rich taste is demanded in the market include a food in which meat is used, such as a food in which ground meat is used (hereinafter referred to as "ground meat-processed food"), and a meat substitute food. Other examples of such foods include liquid foods, such as stew, various soups, and custard cream.

The strength of a rich taste and the manner in which the rich taste is felt vary depending on the chemical composition, texture, and the like of a food or beverage, and in particular, significantly depend on the amount and type of the fat and oil contained in the food or beverage.

For example, when meat such as beef, pork, or chicken is subjected to a heating treatment such as baking or frying, the heat causes the fats and oils and the moisture to bleed from the meat. This effect causes problems, such as an impairment of a juicy texture and a rich taste or a manifestation of a hard texture or a dry texture due to thermal denaturation of protein. In particular, the problems are known to more obviously arise in ground meat-processed food.

In recent years, there has been an increase in meat substitute foods produced by substituting a part or the whole of an animal-derived material such as meat or an animal fat and oil with a plant protein material or a processed food thereof (e.g., tofu). This increase is a result of factors such as health concerns, ethics, religion, and the like. With the meat substitute foods, the problems described above are known to occur in an obvious manner, and a rich taste specific to the animal fat and oil is lacking. Therefore, addition or enhancement of a rich taste is necessary.

For this reason, a method for suppressing a reduction, due to heating of a ground meat-processed food or a meat substitute food (hereinafter these are also referred to as "ground meat-processed foods" collectively), in a rich taste and a texture and a method for adding a rich taste and a texture have been studied in the past. As one of the methods, a method in which a kneading fat and oil composition is added to compensate for a fat and oil and moisture that have been bled out by heating has been reported (for example, Patent Literatures 1 to 3).

The applicant of the present invention has also studied a solid oil-in-water emulsified fat for use in a meat-processed food, this fat being used in the production of ground meat-processed foods, and the applicant of the present invention has applied for a patent (Patent Literature 4).

On the other hand, for producing a food or beverage having a preferable rich taste, a milk material such as milk, butter, cheese, or milk fat, or an animal-derived material such as lard, beef tallow, or collagen has been used. In addition to concerns arising from perspectives on health, ethics, and religion, use of animal-derived materials has also recently raised concerns about sudden increase in the price of animal-derived materials, instability of supply thereof, and the like. Therefore, foods produced by substituting a part or the whole of the animal-derived material with a plant material have been recently studied (for example, Patent Literatures 5 to 11).

### RELATED ART REFERENCE

### Patent Literature

Patent Literature 1: Japanese Patent Application Laid-Open No. 2021-069332 A
Patent Literature 2: Japanese Patent Application Laid-Open No. 2019-115339 A
Patent Literature 3: International Publication No. 2020/004058
Patent Literature 4: Japanese Patent Application Laid-Open No. 2017-051156 A
Patent Literature 5: Japanese Patent No. 7045507
Patent Literature 6: Japanese Patent Application Laid-Open No. 2018-174728 A
Patent Literature 7: Japanese Patent Application Laid-Open No. 2022-027964 A
Patent Literature 8: Japanese Patent Application Laid-Open No. 2021-052700 A
Patent Literature 9: Japanese Patent Application Laid-Open No. 2021-073930 A
Patent Literature 10: Japanese Patent Application Laid-Open No. 2018-088912 A
Patent Literature 11: International Publication No. 2018/159406

### SUMMARY OF INVENTION

### PROBLEM TO BE SOLVED BY THE INVENTION

Among the meat substitute foods that are being popularized mainly among preference-having consumers such as vegetarians or vegans, there are foods and beverages produced using no animal-derived material (for example, so-called plant-based food). With such foods and beverages, the raw materials used in the production of a food or beverage containing an animal-derived material cannot be typically used as is.

Therefore, there is a need for a fat and oil composition for enhancing a rich taste and flavor that can be used not only in production of a food or beverage produced using an animal-derived material but also in production of a food or beverage produced using no animal-derived material.

An object of the present invention is to provide a fat and oil composition, for rich taste enhancement, that can achieve the following matters (1) and (2):
(1) the composition can be used irrespective of a food or beverage to be applied, and has good workability; and
(2) the composition can improve the rich taste of a food or beverage.

### MEANS FOR SOLVING PROBLEM

The inventor of the present invention has intensively studied, and as a result, found that the above-described problems can be solved by using a fat and oil composition produced using a specific fat and oil so that a constant ratio of a solid fat content is satisfied.

The present invention includes the following.
[1] A fat and oil composition for rich taste enhancement comprising any one or more of the following fats and oils (A) to (C), the fat and oil composition having a ratio SFC-25/SFC-35 of a solid fat content at 25°C (SFC-25) (%) relative to a solid fat content at 35°C (SFC-35) (%) of 2.2 to 80:
   (A) a cocoa butter,
   (B) a shea butter, and
   (C) a fractionated oil of a shea butter.
[2] The fat and oil composition for rich taste enhancement according to [1], wherein a fatty acid residue chemical composition satisfies any one or more of the following conditions (i) and (ii):
   Condition (i) a content of a lauric acid residue in the fatty acid residue chemical composition is 15% by mass or less; and
   Condition (ii) a content of a linoleic acid residue in the fatty acid residue chemical composition is 5 to 45% by mass.
[3] The fat and oil composition for rich taste enhancement according to claim [1] or [2], wherein a total content of the (A) to (C) fats and oils is 20 to 80% by mass.
[4] The fat and oil composition for rich taste enhancement according to [1] or [2], comprising any one or more of the following (D) to (G):
   (D) at least one selected from a cottonseed oil, a rice oil, and a rapeseed oil;
   (E) a palm oil;
   (F) a palm-based oil; and
   (G) an olive oil.
[5] The fat and oil composition for rich taste enhancement according to [3], comprising any one or more of the following (D) to (G):
   (D) at least one selected from a cottonseed oil, a rice oil, and a rapeseed oil;
   (E) a palm oil;
   (F) a palm-based oil; and
   (G) an olive oil.
[6] The fat and oil composition for rich taste enhancement according to [1] or [2], wherein a continuous phase is an oil phase.
[7] The fat and oil composition for rich taste enhancement according to [3], wherein a continuous phase is an oil phase.
[8] The fat and oil composition for rich taste enhancement according to [4], wherein a continuous phase is an oil phase.
[9] The fat and oil composition for rich taste enhancement according to [5], wherein a continuous phase is an oil phase.
[10] A ground meat-processed food or meat substitute food using the fat and oil composition for rich taste enhancement according to any one of [1] to [9].
[11] A seasoning using the fat and oil composition for rich taste enhancement according to any one of [1] to [9].
[12] A cooking oil using the fat and oil composition for rich taste enhancement according to any one of [1] to [9].
[13] A liquid food using the fat and oil composition for rich taste enhancement according to any one of [1] to [9].

### EFFECT OF THE INVENTION

According to the present invention, it is possible to provide a fat and oil composition, for rich taste enhancement, that can achieve the following matters (1) and (2) :
(1) the composition can be used irrespective of a food or beverage to be applied, and has good workability; and
(2) the composition can improve the rich taste of a food or beverage.

### EMBODIMENT FOR CARRYING OUT THE INVENTION

Hereinafter, the present invention will be described according to its suitable embodiments. The present invention is not limited by the following description, and each constituent element may be appropriately modified without departing from the scope of the gist of the present invention.

### [Fat and oil composition for rich taste enhancement]

Hereinafter, the fat and oil composition for rich taste enhancement of the present invention will be described in detail. The food or beverage made using the fat and oil composition for rich taste enhancement of the present invention is hereinafter simply referred to as "the food or beverage of the present invention."

The fat and oil composition for rich taste enhancement of the present invention contains any one or more of the following fats and oils (A) to (C), and has a ratio SFC-25/SFC-35 of a solid fat content at 25°C (SFC-25) (%) relative to a solid fat content at 35°C (SFC-35) (%) of 2.2 to 80:
(A) a cocoa butter,
(B) a shea butter, and
(C) a fractionated oil of shea butter.

Hereinafter, the above-described fat and oil (A) may be simply referred to as "fat and oil A", and the same applies to other fats and oils.

First, the fats and oils A to C used in the fat and oil composition for rich taste enhancement of the present invention will be described.

### <(A) Cocoa butter >

In the present invention, cocoa butter is a fat and oil obtained from cocoa beans, cocoa nibs, and cocoa mass, and is generally used as a chocolate raw material.

A fatty acid residue chemical composition varies depending on a production method or production area thereof, a content of a stearic acid residue in the fatty acid residue chemical composition of the cocoa butter used in the present invention is preferably 20% by mass or more, more preferably 25% by mass or more, still more preferably 30% by mass or more, and the upper limit thereof is preferably 40% by mass or less. Thus, in one embodiment, the content of the stearic acid residue is preferably 20 to 40% by mass, more preferably 25 to 40% by mass, still more preferably 30 to 40% by mass. A content of an oleic acid residue in the fatty acid residue chemical composition of the cocoa butter is preferably 20% by mass or more, more preferably 25% by mass or more, still more preferably 30% by mass or more, and the upper limit thereof is preferably 40% by mass or less. Thus, in one embodiment, the content of the oleic acid residue is preferably 20 to 40% by mass, more preferably 25 to 40% by mass, still more preferably 30 to 40% by mass.

The fatty acid residue chemical composition of the fat and oil used in the present invention can be measured using a capillary gas chromatography method in accordance with "2.4.2.3-2013 of Standard Methods for the Analysis of Fats, Oils and Related Materials established by Japan Oil Chemists' Society", or "2.4.4.3-2013 of Standard Methods for the Analysis of Fats, Oils and Related Materials established by Japan Oil Chemists' Society". The fatty acid residue chemical composition indicated in the present invention is based on values measured using a capillary gas chromatography method in accordance with "2.4.2.3-2013 of Standard Methods for the Analysis of Fats, Oils and Related Materials established by Japan Oil Chemists' Society", or "2.4.4.3-2013 of Standard Methods for the Analysis of Fats, Oils and Related Materials established by Japan Oil Chemists' Society".

The iodine value of the cocoa butter selected and used in the present invention is preferably 20 to 40, more preferably 25 to 40, still more preferably 30 to 40.

The cocoa butter used in the present invention may be refined by a conventional common method or may be unrefined. It is preferable to use undeodorized cocoa butter to improve the rich taste of the food or beverage of the present invention produced using the fat and oil composition for rich taste enhancement of the present invention.

In the present invention, the solid fat content SFC-25 of the cocoa butter at 25°C is preferably 20% or more, more preferably 25% or more, and still more preferably 30% or more, and the upper limit thereof is preferably 90% or less, 85% or less, 80% or less, 75% or less, or 70% or less, more preferably 45% or less. Therefore, the SFC-25 of the cocoa butter is preferably 20 to 90%, more preferably 20 to 45%, still more preferably 25 to 45%, still further preferably 30 to 45%. The solid fat content SFC-35 of the cocoa butter at 35°C is preferably 0 to 15%, more preferably 0 to 10%, still more preferably 0 to 5%.

### <(B) Shea butter>

In the present invention, shea butter is a vegetable fat and oil obtained from the embryo of a seed of Vitellaria paradoxa C.F. Gaertn., Sapotaceae family, and refers to the vegetable fat and oil in which the fatty acid residue chemical composition contains as a main component a stearic acid residue and an oleic acid residue (the total content of the stearic acid residue and the oleic acid residue is 80% by mass or more).

Although the fatty acid residue chemical composition varies depending on a production method or production area thereof, the content of the stearic acid residue in the fatty acid residue chemical composition of the shea butter used in the present invention is preferably 30% by mass or more, more preferably 35% by mass or more, still more preferably 40% by mass or more, and the upper limit thereof is preferably 50% by mass or less or 45% by mass or less. Thus, in one embodiment, the content of the stearic acid residue is preferably 30 to 50% by mass, more preferably 30 to 45% by mass, still more preferably 35 to 45% by mass. The content of the oleic acid residue in the fatty acid residue chemical composition of the shea butter is preferably 30% by mass or more, more preferably 35% by mass or more, still more preferably 40% by mass or more or 42% by mass or more, and the upper limit thereof is preferably 60% by mass or less, more preferably 58% by mass or less, still more preferably 56% by mass or less, 54% by mass or less, 52% by mass or less or 50% by mass or less. Thus, in one embodiment, the content of the oleic acid residue is preferably 40 to 60% by mass, more preferably 40 to 58% by mass, still more preferably 42 to 56% by mass.

The iodine value of the shea butter selected and used in the present invention is preferably 50 to 70, more preferably 55 to 70, still more preferably 60 to 70.

The shea butter used in the present invention may be refined by a conventional common method, or may be unrefined, but preferably deodorized, so that the rich taste of the food or beverage of the present invention produced using the fat and oil composition for rich taste enhancement of the present invention is improved.

The solid fat content SFC-25 of the shea butter at 25°C is preferably 25 to 50%, more preferably 30 to 50%, still more preferably 35 to 50%, and the solid fat content SFC-35 of the shea butter at 35°C is preferably 5 to 25%, more preferably 5 to 20%, still more preferably 5 to 15%.

### <(C) Fractionated oil of shea butter>

In the present invention, a fractionated oil of the shea butter refers to a fractionated soft part oil, a fractionated middle part oil, a fractionated hard part oil of the above-described shear butter, or a fractionated oil obtained by one or more fractionations of a fractionated oil of the shea butter, and contains so-called double olein, double stearin, and the like.

The term "fractionated soft part oil" means a portion that has a low melting point and is obtained by a fractionation procedure that separates and removes a portion having a high melting point. The term "fractionated hard part oil" means a portion that has a high melting point and is obtained by a fractionation procedure that separates and removes a portion having a low melting point. The term "fractionated middle part oil" means a portion of the fractionated soft part oil that has a high melting point or a portion of the fractionated hard part oil that has a low melting point, these portions being obtained by further fractionating the fractionated soft part oil or the fractionated hard part oil.

The fat and oil C may be a fat and oil including only one type of the fractionated oil or a mixed fat and oil including two or more types thereof. From the viewpoint of favorably improving the rich taste of the food or beverage of the present invention, a fractionated soft part oil of the shea butter, a fractionated middle part oil of the shea butter, or a fractionated oil obtained by further fractionating these is preferably selected and used. More preferably, a fractionated soft part oil of shear butter or a fractionated oil obtained by further fractionating the fractionated soft part oil is selected and used. Still more preferably, the fractionated soft part oil of the shea butter is selected and used.

A fractionation method when the fractionated oil of the shea butter is obtained is not particularly limited, and a publicly known method can be used. Examples of the fractionation method include fractionation with a solvent such as fractionation with acetone and fractionation with hexane, and fractionation without a solvent such as crystallization. Fractionation may be performed multiple times as necessary, and the condition of each fractionation may be changed. Fractionation with a solvent and fractionation without a solvent may be combined with each other.

The iodine value of the fractionated soft part oil of the shea butter is preferably 45 or more, more preferably 50 or more, still more preferably 50 to 75. The iodine value of the fractionated hard part oil of the shea butter is preferably less than 45, more preferably 44 or less, still more preferably 40 or less, still further preferably 25 to 40.

In the present invention, the solid fat content SFC-25 of the fractionated soft part oil of the shea butter at 25°C is preferably 0 to 20%, more preferably 0 to 15%, still more preferably 0 to 10%, and the solid fat content SFC-35 of the fractionated soft part oil of the shea butter at 35°C is preferably 0 to 15%, more preferably 0 to 10%, still more preferably 0 to 5%.

The solid fat content SFC-25 of the fractionated hard part oil of the shea butter at 25°C is preferably 55 to 85%, more preferably 60 to 80%, still more preferably 65 to 75%, and the solid fat content SFC-35 of the fractionated hard part oil of the shea butter at 35°C is preferably 0 to 20%, more preferably 0 to 15%, still more preferably 0 to 10%.

### <Combinations of fats and oils A to C and contents of fats and oils A to C in the present invention>

The fat and oil composition for rich taste enhancement of the present invention contains any one or more of the fats and oils A to C described above, and a combination thereof is freely selected. From the viewpoint of improving the advantageous effects of the present invention, it is preferable that the fat and oil composition for rich taste enhancement contains two types of the fat and oil A and the fat and oil B in combination or two types of the fat and oil A and the fat and oil C in combination, and it is more preferable that the fat and oil composition for rich taste enhancement contains two types of the fat and oil A and the fat and oil C in combination. Among these, it is further preferable that the fat and oil composition for rich taste enhancement contains two types of the fat and oil A and the fat and oil C in combination with the fat and oil C being the fractionated soft part oil of the shea butter.

The content of each of the above-described fats and oils A to C is not particularly limited because it varies depending on the required workability and the desired strength of the rich taste of the food or beverage to be added and enhanced. From the viewpoint of favorably satisfying the solid fat content and the fatty acid residue chemical composition described later so as to improve the advantageous effects of the present invention, the content of the above-described fat and oil A is, for example, preferably 1% by mass or more, more preferably 1.5% by mass or more, and the upper limit thereof is preferably 25% by mass or less or 20% by mass or less, more preferably 18% by mass or less, 16% by mass or less or 15% by mass or less, still more preferably 13% by mass or less or 12% by mass or less. Thus, in one embodiment, the content of the fat and oil A is preferably 1 to 25% by mass, more preferably 1 to 18% by mass, still more preferably 1 to 13% by mass. The content of the above-described fat and oil B is preferably 1% by mass or more, more preferably 1.5% by mass or more, 2% by mass or more, 4% by mass or more or 5% by mass or more, and the upper limit thereof is preferably 25% by mass or less or 20% by mass or less, more preferably 18% by mass or less, 16% by mass or less or 15% by mass or less, more preferably 13% by mass or less or 12% by mass or less. Thus, in one embodiment, the content of the fat and oil B is preferably 1 to 25% by mass, more preferably 1 to 18% by mass, still more preferably 5 to 13% by mass. The content of the above-described fat and oil C is preferably 1% by mass or more, 1.5% by mass or more, 2% by mass or more, 4% by mass or more, 5% by mass or more, 6% by mass or more or 8% by mass or more, more preferably 10% by mass or more, and the upper limit thereof is preferably 70% by mass or less, 65% by mass or less or 60% by mass or less, more preferably 55% by mass or less, 50% by mass or less, 45% by mass or less or 40% by mass or less, still more preferably 35% by mass or less or 30% by mass or less. Thus, in one embodiment, the content of the fat and oil C is preferably 10 to 70% by mass, more preferably 10 to 55% by mass, still more preferably 10 to 35% by mass.

In addition, the content of the above-described fats and oils A to C in the fat and oil composition for rich taste enhancement of the present invention is optionally determined within a range in which the advantageous effects of the present invention are not impaired. From the viewpoint of facilitating the production of the fat and oil composition, for rich taste enhancement, that achieves more favorable rich taste while maintaining good workability, the total content of the above-described fats and oils A to C is preferably 10% by mass or more or 15% by mass or more, more preferably 20% by mass or more, and the upper limit thereof is preferably 80% by mass or less, 75% by mass or less or 70% by mass or less, more preferably 65% by mass or less, 60% by mass or less, 55% by mass or less, 50% by mass or less, 45% by mass or less or 40% by mass or less, still more preferably 35% by mass or less, 34% by mass or less, 32% by mass or less or 30% by mass or less. Thus, in one embodiment, the total content of the fats and oils A to C is preferably 20 to 80% by mass, more preferably 20 to 65% by mass, still more preferably 20 to 35% by mass.

The reason why the above-described fats and oils A to C being contained within the above-described ranges further improves the rich taste of the food or beverage of the present invention, this food or beverage being described later and being produced using the fat and oil composition for rich taste enhancement of the present invention, is unknown at the present stage. The present inventor believes that phytosterols derived from these fats and oils are contained in the food or beverage in a certain amount, thereby further improving the rich taste.

### <Other fats and oils that can be used in the present invention>

In addition to the above-described fats and oils A to C, other fats and oils that can be used in the fat and oil composition for rich taste enhancement of the present invention will be described. Whether or not other fats and oils other than the above-described fats and oils A to C are contained in the fat and oil composition for rich taste enhancement of the present invention is optional, and examples of such fats and oils include various types of vegetable fats and oils and animal fats and oils such as a soybean oil, a rapeseed oil, a corn oil, a cottonseed oil, an olive oil, a peanut oil, a rice oil, a safflower oil, a sunflower oil, a palm oil, a palm kernel oil, a coconut oil, a sal fat, a mango seed butter, milk fat, beef tallow, lard, a fish oil, and a whale oil, and various fats and oils obtained by subjecting the above fats and oils to one type or two types or more of physical or chemical treatment such as hydrogenation, fractionation, and interesterification. These other fats and oils may be solely used, or two types or more thereof may also be used in combination.

In the fat and oil composition for rich taste enhancement of the present invention, one type or two types or more of other fats and oils are selected from these fats and oils and are appropriately contained in addition to the above-described fats and oils A to C so that the solid fat content and the fatty acid residue chemical composition which will be described later will be favorably satisfied.

From the viewpoint of further enhancing the advantageous effects of the present invention, it is preferable that the fat and oil composition for rich taste enhancement of the present invention further contains one or more fats and oils of any one of the following (D) to (G) in accordance with the purpose thereof:
(D) at least one selected from a cottonseed oil, a rice oil, and a rapeseed oil;
(E) a palm oil;
(F) a palm-based oil; and
(G) an olive oil.

### <(D) Cottonseed oil, rice oil, rapeseed oil>

In the present invention, the fat and oil D is a fat and oil which is particularly preferably selected from the viewpoint of further enhancing the rich taste of the obtained food or beverage.

The content of the fat and oil D in the fat and oil composition for rich taste enhancement of the present invention can be optionally set within a range in which the workability at the time of producing the food or beverage does not decrease, and is preferably 5% by mass or more, more preferably 10% by mass or more, and still more preferably 15% by mass or more, and the upper limit thereof is preferably 80% by mass or less, 75% by mass or less or 70% by mass or less. Thus, in one embodiment, the content of the fat and oil D is preferably 5 to 80% by mass, more preferably 10 to 80% by mass, still more preferably 15 to 80% by mass.

Note that it is preferable that the iodine value of the fat and oil D used in the present invention is 90 to 130, and the content of unsaponified products is 5% by mass or less, 4% by mass or less, 2% by mass or less or 1.5% by mass or less.

In the present invention, when a cottonseed oil, a rice oil, and a rapeseed oil are used as the fat and oil D, the reason why the advantageous effects of the present invention are more favorably obtained is not clear, and the present inventors presume that the contained components such as polyphenols and phytosterols in these fats and oils favorably contribute to the advantageous effects of the present invention.

### <(E) Palm oil>

In the present invention, the fat and oil E is particularly preferably selected from the viewpoint of further improving the workability in preparing a base material for such a ground meat-processed food from among the foods and beverages to which the present invention is applied.

The content of the fat and oil E in the fat and oil composition for rich taste enhancement of the present invention can be optionally set within a range in which the fat and oil E does not impair the rich taste or flavor of the obtained food or beverage, and is preferably 10% by mass or more, more preferably 30% by mass or more, still more preferably 50% by mass or more, 55% by mass or more or 60% by mass or more, and the upper limit thereof is preferably 85% by mass or less or 80% by mass or less. Thus, in one embodiment, the content of the fat and oil E is preferably 10 to 80% by mass, more preferably 30 to 80% by mass, still more preferably 50 to 80% by mass.

The iodine value of the fat and oil E used in the present invention is preferably 45 or more, more preferably 50 or more, and the upper limit thereof is preferably 55 or less, more preferably 53 or less. Thus, in one embodiment, the iodine value of the fat and oil E is preferably 45 to 55, more preferably 50 to 55.

### <(F) Palm-based fat and oil>

In the present invention, the fat and oil F is particularly preferably selected from the viewpoint of further improving the workability in preparing a base material for such a ground meat-processed food from among the foods and beverages to which the present invention is applied. The palm-based fat and oil in the present invention refers to a fat and oil obtained by subjecting a palm oil, as one of the raw materials, to one type or two types or more of physical or chemical treatments such as hydrogenation, fractionation, and interesterification.

The fat and oil F used in the present invention may be specifically selected from a fractionated soft part oil and a fractionated hard part oil which are fractionated oils. Examples of the fractionated soft part oil include a palm olein, a superolein, a soft palm mid fraction, a top olein, and a hard palm mid fraction, and examples of the fractionated hard part oil include a hard stearin, a soft stearin, and a super stearin. Among these, from the viewpoint of obtaining a ground meat-processed food or the like having a good texture, it is preferable to select a palm mid fraction such as a soft palm mid fraction or a hard palm mid fraction as the fat and oil F.

Examples of the fat and oil F include fats and oils obtained by performing interesterification or hydrogenation on one type or more of fats and oils selected from these fats and oils and palm oils.

From the viewpoint of favorably satisfying the solid fat content and the fatty acid residue chemical composition which will be described later and enhancing the workability in producing the food or beverage of the present invention, the iodine value of the fat and oil F is preferably 25 or more, more preferably 28 or more, still more preferably 29 or more or 30 or more, and the upper limit thereof is preferably 50 or less, more preferably 48 or less, still more preferably 45 or less, 44 or less, 42 or less, 40 or less or 39 or less. Thus, in one embodiment, the iodine value is preferably 25 to 50, more preferably 28 to 48, still more preferably 29 to 39.

Examples of the palm-based fats and oils that favorably satisfy the iodine value within the above-described range and can be used in the present invention include a hard stearin, a soft stearin, a soft palm mid fraction, a hard palm mid fraction, and fats and oils obtained by subjecting them to interesterification or hydrogenation, with a hard stearin and a soft palm mid fraction being preferably used.

The content of the fat and oil F in the fat and oil composition for rich taste enhancement of the present invention can be optionally set within a range in which the rich taste and flavor of the obtained food or beverage do not decrease, and is preferably 3% by mass or more, more preferably 6% by mass or more, still more preferably 10% by mass or more, and the upper limit thereof is preferably 45% by mass or less, more preferably 40% by mass or less, 35% by mass or less or 30% by mass or less, still more preferably 25% by mass or less. Thus, in one embodiment, the content of the fat and oil F is preferably 3 to 45% by mass, more preferably 6 to 40% by mass, still more preferably 10 to 25% by mass.

### <(G) Olive oil>

In the present invention, the fat and oil G is particularly preferably selected from the viewpoint of making the food or beverage to which the present invention is applied have a much better rich taste and a much better flavor.

The content of the fat and oil G in the fat and oil composition for rich taste enhancement of the present invention can be optionally set within a range in which the fat and oil G does not impair the rich taste or flavor of the obtained food or beverage, and is preferably 0.05% by mass or more, more preferably 0.1% by mass or more, still more preferably 0.2% by mass or more, and the upper limit thereof is preferably 0.6% by mass or less. Thus, in one embodiment, the content of the fat and oil G is preferably 0.05 to 0.6% by mass, more preferably 0.1 to 0.6% by mass, still more preferably 0.2 to 0.6% by mass.

The iodine value of the fat and oil G used in the present invention is preferably 70 or more, more preferably 75 or more, and the upper limit thereof is preferably 99 or less, more preferably 94 or less. Thus, in one embodiment, the iodine value of the fat and oil G is preferably 70 to 99, more preferably 75 to 94.

Olive oil preferably used in the present invention will be described in more detail.

Olive oil in the present invention is a fat and oil that does not use anything other than olive oil (not mixed with other types of fats and oils).

The olive oil used as the fat and oil G may be an olive oil having an acid value which is defined by JAS of 2.0 or less, a refined olive oil having an acid value of 0.60 or less, or a mixture of a refined olive oil and an olive oil having an acid value of 2.0 or less, and it is preferable to use an olive oil having an acid value of 2.0 or less (i.e., an olive oil that is not subjected to a refining treatment).

An acid value refers to the amount of potassium hydroxide (mg) required to neutralize the free fatty acids in 1 g of a fat and oil, and the method of measuring an acid value can be performed using a conventionally known method. For example, an acid value can be measured by the method described in "2.3.1 (2013) of Standard Methods for the Analysis of Fats, Oils and Related Materials established by Japan Oil Chemists' Society".

When the acid value of the olive oil deviates from the above-described range, for example, the olive oil can be subjected to a refining treatment to be within the above-described range. Examples of the refining treatment include refining treatments that are usually applied to edible fats and oils, such as degumming, neutralization, deodorization, and bleaching, and any one type or more of these are performed. Note that the above-described refining treatment can be performed by a conventionally known method.

In the present invention, when an olive oil is used as the fat and oil G, although the reason why the advantageous effects of the present invention is more favorably obtained is not clear, the present inventors presume that the contained components of various aroma substances such as polyphenols and aldehydes in the olive oil favorably contribute to the advantageous effects of the present invention. Therefore, it is considered that the use of the olive oil that is not subjected to a refining treatment is preferable.

### <Ratio of solid fat content SFC-25/SFC-35>

Next, the ratio of the solid fat content SFC-25/SFC-35 in the fat and oil composition for rich taste enhancement of the present invention will be described. The SFC-25/SFC-35 in the fat and oil composition for rich taste enhancement of the present invention is 2.2 to 80. The lower limit thereof is preferably 2.3 or more, more preferably 2.4 or more, still more preferably 2.6 or more, and the upper limit thereof is preferably 70 or less, more preferably 65 or less, 60 or less or 55 or less, still more preferably 50 or less, 40 or less or 30 or less, more preferably 25 or less, 24 or less, 22 or less or 20 or less. Thus, in one embodiment, the SFC-25/SFC-35 is preferably 2.3 to 65, more preferably 2.4 to 50, still more preferably 2.6 to 25.

When the SFC-25/SFC-35 of the fat and oil composition for rich taste enhancement falls within the range of 2.2 to 80, good workability in producing the food or beverage and the production of food or beverage having good rich taste and flavor both can be achieved.

From the viewpoint of obtaining good workability in producing food or beverage using the fat and oil composition for rich taste enhancement of the present invention, SFC-25 of the fat and oil composition for rich taste enhancement of the present invention is preferably 5 to 30%, more preferably 5 to 24%, still more preferably 5 to 20%.

In addition, from the viewpoint of improving the rich taste and juicy feeling (or oily feeling) at the time of consumption after the food or beverage is produced using the fat and oil composition for rich taste enhancement of the present invention, the SFC-35 of the fat and oil composition for rich taste enhancement of the present invention is preferably 0 to 12%, more preferably 0 to 10%, still more preferably 0 to 8%.

A value of a solid fat content (SFC, Solid Fat Contents) indicates the content of a solid fat in fats and oils at a given temperature, and can be measured by conventional common methods. In the present invention, the SFC of a sample to be measured is measured by a pulse NMR (direct method) described in cd16b-93 of the AOCS official method, and then the measured value is converted into the amount of oil phase to be regarded as the SFC value.

That is, when a sample without an aqueous phase is measured, the measured value itself is regarded as the SFC, and when a sample with an aqueous phase is measured, the value obtained by converting the measured value into the amount of an oil phase is regarded as the SFC value.

The solid fat content SFC-25 at 25°C shown in the present invention is based on a value (in terms of oil phase) measured by the pulse NMR (direct method) described above for a sample (fat and oil composition for rich taste enhancement) that has been allowed to stand for 30 minutes in a thermostatic bath set at 25°C. Furthermore, the solid fat content SFC-35 at 35°C shown in the present invention is based on a value (in terms of oil phase) measured by the pulse NMR (direct method) described above for a sample that has been allowed to stand for 30 minutes in a thermostatic bath set at 35°C.

In addition, the requirement of SFC-25/SFC-35 in the fat and oil composition for rich taste enhancement of the present invention may be simply referred to as "condition (1)" hereinafter.

### <Fatty acid residue chemical composition>

A content of a lauric acid residue in the fatty acid residue chemical composition of the fats and oils contained in the fat and oil composition for rich taste enhancement of the present invention is preferably 15% by mass or less, more preferably 8% by mass or less, still more preferably 4% by mass or less.

When the content of the lauric acid residue in the fatty acid residue chemical composition satisfies the above-described range, the rich taste and juicy feeling of the obtained food or beverage are more easily sensed. In addition, when the food or beverage is a ground meat-processed food or the like, the texture thereof is unlikely to be hardened.

Furthermore, the content of the linoleic acid residue in the fatty acid residue chemical composition of the fats and oils contained in the fat and oil composition for rich taste enhancement of the present invention is preferably 5.0% by mass or more, more preferably 6.0% by mass or more, still more preferably 7.0% by mass or more, and the upper limit thereof is preferably 45% by mass or less, more preferably 35% by mass or less, 30% by mass or less or 25% by mass or less, still more preferably 20% by mass or less. Thus, in one embodiment, the content of the linoleic acid residue in the fatty acid residue chemical composition is preferably 5.0 to 45% by mass, more preferably 7.0 to 35% by mass, still more preferably 7.0 to 20% by mass.

When the content of the linoleic acid residue in the fatty acid residue chemical composition satisfies the above-described range, the workability tends to be improved, and when the food or beverage is a ground meat-processed food or the like, the workability in preparing a base material for such a ground meat-processed food is improved, and stickiness and greasiness of the base material tend to be suppressed.

On the other hand, the content of the trans fatty acid, which is a health risk concern, is more preferable the lower it is. The content of the trans fatty acid residue in the fatty acid residue chemical composition of the fats and oils contained in the fat and oil composition for rich taste enhancement of the present invention is preferably less than 5% by mass, more preferably less than 3% by mass, still more preferably less than 2% by mass.

The requirement of the content of the lauric acid residue in the fatty acid residue chemical composition of the fats and oils contained in the fat and oil composition for rich taste enhancement of the present invention is hereinafter simply referred to as "condition (2)", and the requirement of the content of the linoleic acid residue is hereinafter simply referred to as "condition (3)" in some cases.

### <Other raw materials>

The fat and oil composition for rich taste enhancement of the present invention may be constituted by one or more fats and oils selected from the above-described fats and oils A to C, and this composition preferably also contains one or more fats and oils selected from the above-described fats and oils D to G. In other words, the fat and oil composition can consist only of fats and oils, and may also contain water or other raw materials as necessary as long as the object of the present invention is not hindered.

When the fat and oil composition for rich taste enhancement of the present invention contains water, the content of water in the fat and oil composition for rich taste enhancement is preferably 1 to 40% by mass, more preferably 5 to 30% by mass. When the other raw materials described later contain water, the content of water including the water is preferably within the above-described range.

Examples of other raw materials that may be contained in the fat and oil composition for rich taste enhancement of the present invention include sugars, an emulsifier, starches, dextrin, dietary fibers, a salty agent such as sodium chloride and potassium chloride, an acidifier such as acetic acid, lactic acid, and gluconic acid, milk and dairy products such as skimmed milk powder, casein, whey powder, nonfat concentrated milk, and protein-enriched whey, a sweetener such as stevia and aspartame, a coloring agent such as β-carotene, caramel, and red koji pigment, an antioxidant such as tocopherol and tea extract, a plant protein such as wheat protein and soybean protein, eggs and various processed egg products such as whole egg, egg yolk, enzyme-treated egg yolk, egg white and egg protein, a flavoring, a seasoning, an yeast extract, a pH adjuster, a food preservative, a shelf life enhancer, fruits, fruit juices, coffee, nut pastes, a spices, cocoa mass, cocoa powder, grains, beans, vegetables, meat, seafood, and other food ingredients and food additives.

Raw materials other than those above may be optionally contained and used as long as the object of the present invention is not hindered. The content of the other raw materials is preferably 50% by mass or less, more preferably 30% by mass or less, still more preferably 25% by mass or less, in the fat and oil composition for rich taste enhancement of the present invention.

In the other raw materials, examples of the emulsifier include a monoglycerol fatty acid ester, a diglycerol fatty acid ester, a sucrose fatty acid ester, a sorbitan fatty acid ester, a propylene glycol fatty acid ester, lecithin, an organic acid monoglyceride, a polyglycerol fatty acid ester, a polyglycerol condensed ricinoleic acid ester, calcium stearoyl lactate, and sodium stearoyl lactate. These emulsifiers may be used singly or in combination of two or more.

When the emulsifier is contained, the content thereof is preferably 10% by mass or less, more preferably 5% by mass or less, still more preferably 3% by mass or less, in the fat and oil composition for rich taste enhancement, from the viewpoint of not impairing the flavor expression and the rich taste of the food or beverage.

### <Continuous phase of fat and oil composition for rich taste enhancement of the present invention>

Examples of forms of the fat and oil composition for rich taste enhancement of the present invention include foods containing a fat and oil, for example, plastic fat and oil compositions such as margarine, fat spread, shortening, and butter, a liquid oil, fluid shortening, fluid margarine, a powdered fat and oil, and whipped cream.

A continuous phase of the fat and oil composition for rich taste enhancement of the present invention may be an oil phase or an aqueous phase. In order to sufficiently achieve the advantageous effects of the fat and oil composition for rich taste enhancement of the present invention, the amount of the aqueous phase component is preferably small, and therefore the continuous phase is preferably the oil phase. The continuous phase being an oil phase is advantageous because of the following effects. The fat and oil composition can be kneaded easily into a base material for ground meat-processed foods and the like, a seasoning for such foods, a seasoning oil for such foods, a cooking oil, dough for a bakery product, a base material for a plant-based food, or the like, and furthermore the fat and oil composition can be evenly spread across the whole material with ease.

In the present invention, the fat and oil composition for rich taste enhancement is preferably in the form in which the continuous phase is an oil phase and does not contain an aqueous phase, like shortening, fluid shortening, or the like, since a desired effect is achieved by a relatively small amount of the fat and oil composition.

When the fat and oil composition for rich taste enhancement of the present invention is an emulsion, the emulsified state is not particularly restricted, and may be any of water-in-oil, oil-in-water, and double emulsions. The fat and oil composition for rich taste enhancement of the present invention is preferably a multiple emulsion in which the continuous phase is the oil phase, such as a water-in-oil emulsion or an oil-in-water-in-oil emulsion, particularly preferably a water-in-oil emulsion from the viewpoint of simple production. When the fat and oil composition for rich taste enhancement of the present invention is in the form of an oil-in-water-in-oil emulsion, the above-described oils or fats A to C may be contained in an outer oil phase or an inner oil phase.

It is noted that the fat and oil composition for rich taste enhancement of the present invention may be plastic from the viewpoint of improving the workability, especially when a base material for ground meat-processed foods, a dough of a bakery product, or a base material for a plant-based food is produced. When the fat and oil composition for rich taste enhancement is plastic, the fats and oils can be uniformly dispersed in the base material or the dough with ease, which produces an advantage such as shortening of operation time. For the base material for ground meat-processed foods, the generation of stickiness and greasiness can be prevented.

### <Method for producing fat and oil composition for rich taste enhancement of the present invention>

The method for producing the fat and oil composition for rich taste enhancement of the present invention is not particularly limited, and a publicly known method can be employed as long as the fat and oil composition for rich taste enhancement containing any one or more of the above-described fats and oils A to C can be produced.

For example, when the fat and oil composition for rich taste enhancement of the present invention takes the form of a plastic fat and oil composition, the plastic fat and oil composition can be produced by allowing any one or more of the above-described fats and oils A to C to be contained in an oil phase in the process of producing the plastic fat and oil composition, and rapidly cooling and plasticizing the mixture.

When the fat and oil composition for rich taste enhancement of the present invention contains an aqueous phase, a plastic fat and oil composition can be produced by mixing and dispersing any one or more of the above-described fats and oils A to C in an oil phase, and then rapidly cooling and plasticizing the fat and oil together with the aqueous phase.

In accordance with a preferred embodiment of the present invention, a method for producing a fat and oil composition for rich taste enhancement, in which the continuous phase is an oil phase and which is a shortening that is a plastic fat and oil composition, will be described below.

In order to produce a fat and oil composition for rich taste enhancement, in which the continuous phase is an oil phase and which is a shortening that is a plastic fat and oil composition, any one or more of the above-described fats and oils A to C is mixed in an amount so that the content thereof falls within the above-described range, with other edible fats and oils, as necessary, preferably any one or more of the fats and oils D to G, to produce an oil phase which becomes a continuous phase. At this time, as necessary, other oil-soluble raw materials may be mixed into the oil phase.

The oil phase obtained as described above is preferably subjected to a sterilization treatment. The sterilization method may be a batch method in a tank or a continuous method using a plate type heat exchanger or a scraping type heat exchanger. The sterilization temperature is preferably 80 to 100°C, more preferably 80 to 95°C, still more preferably 80 to 90°C. The sterilization time is preferably 30 to 300 seconds, more preferably 40 to 285 seconds, still more preferably 50 to 260 seconds when sterilization is continuously performed at 85°C using, for example, a scraping type heat exchanger. After that, as necessary, pre-cooling is performed to such an extent that the fat and oil crystals do not precipitate. The temperature for the pre-cooling is preferably 40 to 60°C, more preferably 40 to 55°C, still more preferably 40 to 50°C.

The pre-cooled oil phase is then cooled, as necessary. Preferably, rapid cooling and plasticizing is performed. This rapid cooling and plasticizing can be performed using, for example, a combination of a closed continuous scraping tube chiller cooler (A unit), such as a Kombinator, a Votator, a Perfector, and a Chemetator, a plate heat exchanger, an open type Diacooler, and a Complector. By performing the rapid cooling, the oil phase becomes a fat and oil composition having plasticity. During the rapid cooling and plasticizing, a kneading device (B unit) such as a pin machine, a resting tube, or a holding tube may be used.

In the production process of the fat and oil composition for rich taste enhancement of the present invention, nitrogen, air, or the like may be aerated and may alternatively be not aerated.

<Food or beverage to which fat and oil composition for rich taste enhancement of the present invention is applicable>

The fat and oil composition for rich taste enhancement of the present invention can be used in production of a food or beverage.

The fat and oil composition for rich taste enhancement of the present invention can be added to a food or beverage by any procedure at any timing when the food or beverage is produced or eaten. The type of the food or beverage to which the fat and oil composition for rich taste enhancement of the present invention is added is not particularly limited, and in a particularly preferred example, the fat and oil composition is applied to the following foods or beverages (1) to (4):
(1) ground meat-processed foods;
(2) a seasoning;
(3) a cooking oil; and
(4) a liquid food.

Hereinafter, each food or beverage as the preferred example will be described.

### [Ground meat-processed foods]

Ground meat-processed foods can be produced using the fat and oil composition for rich taste enhancement of the present invention. The present invention also provides such ground meat-processed foods. Hereinafter, the ground meat-processed foods of the present invention will be described.

The ground meat-processed food of the present invention refers to a food product obtained by heating a base material for a ground meat-processed food containing one type or two types or more selected from the group consisting of ground meat of beef, pork, chicken, and the like, and a plant protein material. Specific examples thereof include Hamburg steak, fried meat cake, nikudanngo (Japanese meatball), croquette, potsticker, shumai, steamed meat bun, sausage, meatball, tukune(Japanese chicken meatball), meat loaf, spring roll, omelette that contains meat, stuffed cabbage, and xiaolongbao, and one type or more selected from the group consisting of Hamburg steak, fried meat cake, meatball, croquette, potsticker, shumai, steamed meat bun, and sausage are preferred.

A meat substitute food in the present invention is a food produced by cooking and processing a material for a meat substitute food produced using a plant protein material in imitation of meat in various forms of meat, such as block meat, sliced meat, thinly cut meat, molded meat, and ground meat, for example. Specific examples thereof include meat substitute foods in which a part or the whole of the meat used for meat dishes such as roasted meat, steak, Hamburg steak, stewed meat, teriyaki, or charcoaled meat is substituted with meat substitute food materials.

When the ground meat-processed foods described above are produced, the ground meat-processed foods of the present invention are obtained, for example, by heating a base material for the ground meat-processed foods (hereinafter simply referred to as "ground meat-processed food base material of the present invention") that contains one type or more selected from ground meat described below and a plant protein material, this base material also having the above-described fat and oil composition for rich taste enhancement of the present invention mixed in.

In one preferred embodiment, the ground meat-processed foods of the present invention can be produced by a method including:
(1) a base material preparation step of kneading and mixing a raw material containing one type or more selected from ground meat described below and a plant protein material, and the above-described fat and oil composition for rich taste enhancement of the present invention to prepare the ground meat-processed food base material; and
(2) a heating step of heating the prepared ground meat-processed food base material.

Hereinafter, each step in the method for producing the ground meat-processed foods of the present invention will be described.

### Step (1)

The step (1) is the base material preparation step of kneading and mixing a raw material containing one type or more selected from ground meat described below and a plant protein material, and the above-described fat and oil composition for rich taste enhancement of the present invention to prepare the ground meat-processed food base material.

As described above, the ground meat-processed food base material of the present invention contains one type or more selected from ground meat and a plant protein material.

Examples of the meat used in the present invention include beef, pork, chicken, mutton, horsemeat, venison, boar meat, chevon, and turkey, and the meat can be used without limitation to sites, grades, and the like of the meats.

The plant protein material used in the present invention has a protein content that is increased to 40% by mass or more by a treatment such as refining or separating. Examples thereof include a soybean protein, a chickpea protein, a lentil protein, a garden pea protein, and a wheat protein, and a soybean protein and a chickpea protein are preferred.

The content of the above-described meat and the above-described plant protein material in the ground meat-processed food base material of the present invention is not particularly limited, and the ground meat-processed food of the present invention contains at least any one or more thereof.

When the ground meat-processed foods of the present invention, and particularly the meat substitute food is produced using the plant protein material, the plant protein material after soaking in water is preferably used from the viewpoint of achieving a texture without dryness, and the plant protein material after soaking in water and the plant protein material that is not soaked in water are preferably used in combination from the viewpoint of achieving a meat-like texture.

In addition to the fat and oil composition for rich taste enhancement of the present invention, the above-described meat, and the plant protein material, the ground meat-processed foods of the present invention may appropriately contain one type or two types or more of an emulsifier, a pH adjustor, common salt, salts such as a phosphate salt and a glutamate salt, a carbohydrate, a dietary fiber, amino acid, enzymes such as trans-glutaminase and protease, spices such as pepper and mixed spice, extracts such as beef extract and vegetable extract, herbs such as celery and parsley, various vegetables and fruits, a flavor, a pigment, an antioxidant, and water, within a range that does not impair the advantageous effects of the present invention.

The content of the fat and oil composition for rich taste enhancement of the present invention in the ground meat-processed food base material of the present invention varies depending on a desired eating quality or texture. From the viewpoint of a rich taste and a juicy feeling, the content thereof is preferably 3 to 20% by mass, more preferably 3 to 17% by mass, still more preferably 3 to 15% by mass.

The amount of the contained fat and oil composition for rich taste enhancement of the present invention is preferably 1 to 60 parts by mass, more preferably 5 to 40 parts by mass, still more preferably 10 to 30 parts by mass, relative to 100 parts by mass of a total amount of one type or more selected from the meat and the plant protein material.

Since the ground meat-processed food base material of the present invention contains the fat and oil composition for rich taste enhancement in an amount falling within the above-described range, the workability in production of the ground meat-processed foods becomes favorable, and the eating quality and texture when they are eaten become favorable.

The ground meat-processed food base material of the present invention may be prepared by placing the above-described raw material in a mixer bowl or the like, followed by kneading. It is noted that a kneading method is not particularly limited, and kneading may be performed by a predetermined procedure such as kneading with a scraper, a mixer, or an extruder.

At the same time of kneading and mixing by means of an extruder, the raw material may be pressurized and heated, which may be accompanied by expansion of the ground meat-processed food base material. This heating is not considered as the heating in the step (2).

### Step (2)

The step (2) is a heating step of heating the prepared ground meat-processed food base material.

The ground meat-processed foods of the present invention are produced by heating the ground meat-processed food base material prepared as described above, and as necessary, other food materials such as vegetable and egg.

A heating method is not particularly limited, and may be performed, for example, by a publicly known method such as baking, frying, boiling, steaming, heating with super-heated steam, or heating in a microwave oven, and seasoning may be performed during, before, or after the heating.

Conditions such as a heating temperature and a heating time may be appropriately controlled depending on the type of selected raw material, the proportion of the ground meat-processed food base material, the heating method, or the like. The heating temperature is typically 50 to 300°C, and the heating time is typically 30 seconds to 3 hours.

Prior to the above-described heating, the ground meat-processed food base material may be shaped or wrapped.

The shape in the shaping may be any shape such as a plate shape, an elliptical shape, a cylindrical shape, or a spherical shape. A shaping procedure is not particularly limited, and may be performed by hand or using a mold, or by extrusion molding.

### [Seasoning]

A seasoning can be produced using the fat and oil composition for rich taste enhancement of the present invention. The present invention also provides such a seasoning. Hereinafter, the seasoning produced using the fat and oil composition for rich taste enhancement of the present invention (hereinafter also referred to as the "seasoning of the present invention") will be described.

In the present invention, substances that control the taste of a food or beverage in accordance with a preference are collectively referred to as seasoning. The seasoning means both one used in production of a food or beverage and one used when a food or beverage is eaten, and contains a so-called seasoning oil. It is noted that the seasoning oil in the present invention represents a fat and oil composition that is added to a food or beverage to impart a rich taste, preferably to further impart an aroma, a delicious taste, and the like. The seasoning oil contains a fat and oil flavored with a spice, a flavor, or the like, or a fat and oil flavored by extracting any component.

Specific examples of the seasoning of the present invention include soy sauce, miso, mayonnaise, tomato ketchup, sauce, and dressing.

Specific examples of the seasoning of the present invention include seasoning oils including a fat and oil containing an added flavor such as a butter flavor, a citrus flavor, a nut flavor, or a vanilla flavor, and a fat and oil flavored with an aromatic plant or a spice, such as a chili oil, a scallion oil, a ginger oil, and a garlic oil.

Although the seasoning of the present invention can be eaten as it is, the seasoning is preferably used when a food or beverage is produced or when a food or beverage is eaten.

The seasoning of the present invention can be obtained, for example, by adding the fat and oil composition for rich taste enhancement of the present invention in the production of the seasoning as described above, or by mixing the fat and oil composition for rich taste enhancement of the present invention with an existing seasoning produced.

In one preferred embodiment, the seasoning of the present invention can be produced by heating the fat and oil composition for rich taste enhancement of the present invention into a liquid or paste state to impart fluidity, mixing the fat and oil composition for rich taste enhancement with another raw material for the seasoning, and as necessary, subjecting this base material to heating, sterilizing, cooling, and filling steps with stirring.

It is noted that when the seasoning of the present invention is an emulsion, the seasoning of the present invention can be produced by preparing each of an aqueous phase and an oil phase containing the fat and oil composition for rich taste enhancement of the present invention and the seasoning of the present invention described below, emulsifying the aqueous phase and the oil phase into an optional emulsion system, and as necessary, subjecting this emulsion to heating, sterilizing, cooling, and filling processes with stirring.

The state of the seasoning of the present invention can be optionally changed depending on the type of a food or beverage to which the seasoning is applied, and may be any state such as a powder, block, paste, or liquid state.

As a raw material for the seasoning of the present invention, one conventionally known as a raw material for a seasoning or a seasoning oil is optionally used in addition to the fat and oil composition for rich taste enhancement of the present invention.

As the raw material for the seasoning of the present invention, for example, one type or two types or more of an emulsifier, a pH adjustor, common salt, salts such as a phosphate salt and a glutamate salt, sugars, a carbohydrate, a dietary fiber, amino acid, enzymes such as trans-glutaminase and protease, spices such as pepper and mixed spice, extracts such as beef extract and vegetable extract, herbs such as celery and parsley, various vegetables and fruits, a flavor, a pigment, an antioxidant, water, and a fat and oil can be used.

The food or beverage to which the seasoning of the present invention can be applied is not particularly limited, and examples thereof include curry, stew, rice with hashed meat, soup, rice gruel, ingredients of rice served in a bowl with the ingredients, instant noodle, instant soup, deep-fried chicken, croquette, fried meat cake, breaded pork cutlet, gratin, pizza, Chinese fried rice, pilaf, steamed meat bun, potsticker, kamaboko (Japanese steamed fish paste), chikuwa (Japanese boiled or roasted fish paste), fish sausage, negitoro (Japanese ground tuna), grilled fish, potato chip, chocolate, gummi candy, caramel, candy, jelly, pudding, almond tofu, ice cream, ice milk, lacto-ice, iced dessert, coffee beverage such as black coffee, milk coffee, lacto-coffee, coffee with milk, and cafe au lait, cocoa beverage, chocolate beverage, tea, tea with milk, carbonated lactic acid beverage, nutrition supplement drink, health beverage, cow milk, soy milk beverage such as soy milk, soy milk mixed with fruit juice, soy milk with malt, and soy milk fermented with lactic acid, lactic acid beverage, lactic acid bacteria beverage, milk shake, cheese drink, whey beverage, and flavored milk beverage.

The seasoning of the present invention can be used for any food or beverage, and can be used for a food or beverage containing the fat and oil composition for rich taste enhancement of the present invention.

The content of the fat and oil composition for rich taste enhancement of the present invention in the seasoning of the present invention varies depending on the desired strength of the rich taste, eating quality, or texture, and is preferably 0.001 to 30% by mass, more preferably 0.01 to 25% by mass, still more preferably 0.1 to 20% by mass from the viewpoint of imparting a sufficient rich taste to the seasoning of the present invention or from the viewpoint of imparting a sufficient rich taste to a food or beverage produced using the seasoning of the present invention or a food or beverage to be eaten using the seasoning of the present invention.

Since the seasoning of the present invention contains the fat and oil composition for rich taste enhancement in an amount that falls within the above-described range, the eating quality and texture of the seasoning of the present invention or the food or beverage produced using the seasoning of the present invention are favorable when they are eaten.

### [Cooking Oil]

A cooking oil can be produced using the fat and oil composition for rich taste enhancement of the present invention. The present invention also provides such a cooking oil. Hereinafter, the cooking oil produced using the fat and oil composition for rich taste enhancement of the present invention (hereinafter also referred to as the "cooking oil of the present invention") will be described.

In the present invention, the cooking oil refers to a fat and oil used during heat-cooking in food production.

The cooking oil of the present invention can be used in frying when deep-fry without batter, deep-fried chicken, tempura, croquette, fritter, and the like are obtained, or in sauteing, and can be used for both a non-frozen food and a frozen food.

The cooking oil of the present invention may contain other fats and oils as long as it contains the fat and oil composition for rich taste enhancement of the present invention. Such other fats and oils are not particularly limited, and can be selected from one type or two types or more of cooking fats and oils selected from various vegetable fats and oils and animal fats and oils such as a palm oil, a palm kernel oil, a coconut oil, a microalagae oil, a corn oil, a cottonseed oil, a soybean oil, a rapeseed oil, a rice oil, a sunflower oil, a safflower oil, an olive oil, a canola oil, hard fruit fats and oils such as a peanut oil and a macadamia nut oil, a grapeseed oil, an amani oil, beef tallow, a milk fat, lard, a sheep fat, a cocoa fat, a shea fat, a mango kernel oil, a sal fat, an illipe oil, a fish oil, a whale oil, and phospholipids; and processed fats and oils having been subjected to one or more treatments selected from hydrogenation, fractionation, and interesterification.

The content of the fat and oil composition for rich taste enhancement of the present invention in the cooking oil of the present invention varies depending on the desired strength of the rich taste, and from the viewpoint of imparting a sufficient rich taste to the food produced using the cooking oil of the present invention, the content is preferably 10 to 100% by mass, more preferably 15 to 100% by mass, still more preferably 20 to 100% by mass.

The cooking oil of the present invention can be produced by any optional method as long as it contains the fat and oil composition for rich taste enhancement of the present invention, and can be produced by, for example, a method of mixing the fat and oil composition for rich taste enhancement of the present invention with one type or two types or more of the above-described other fats and oils mixed at an optional ratio after being heated and dissolved.

In addition to the above-described components, the cooking oil of the present invention can use raw materials generally blended with cooking oils. Specifically, examples that can be used include a silicone oil, a pH modifier, a seasoning, a coloring agent, a flavor, an antioxidant, sugars, sugar alcohols, and a stabilizer. The amounts of these components may be any optional amounts as long as the advantageous effects of the present invention are not impaired, and may be contained, for example, in an amount of 2.0% by mass or less, preferably 0 to 1.0% by mass, more preferably 0 to 0.5% by mass.

### [Liquid food]

A liquid food can be produced using the fat and oil composition for rich taste enhancement of the present invention. The present invention also provides such a liquid food. Hereinafter, the liquid food produced using the fat and oil composition for rich taste enhancement of the present invention (hereinafter also referred to as the "liquid food of the present invention") will be described.

In the present invention, the liquid food refers to a liquid food prepared by cooking using a material including a starch such as wheat flour, a fat and oil, a milk component such as milk or cheese, an egg component such as whole egg, egg yolk, or egg white, vegetable, or the like. It is noted that the above-described seasoning and cooking oil are not considered as the liquid food of the present invention.

Specific examples of the liquid food of the present invention include white sauce, stew sauce, sauce for hashed meat, demiglace sauce, sauce for pasta, curry sauce, cream sauce, bechamel sauce, custard cream, kudzu tea, daily dish dressed with chick starchy sauce, soup, gratin, rice and cheese casserole, sauce (for yakiniku (Japanese roasted meat), for yakitori (Japanese roasted chicken)), and cooked foods obtained by adding an ingredient to them.

A starch that can be contained in the liquid food of the present invention may be appropriately selected from a wheat flour-derived starch such as wheat flour; a corn-derived starch such as a waxy corn starch or a corn starch; a tapioca-derived starch; a sweet potato-derived starch; a potato-derived starch; a sago palm-derived starch, and a processed starch thereof, and used. The content of the starch in the liquid food of the present invention is preferably 0.05 to 20% by mass, more preferably 0.075 to 15% by mass, still more preferably 0.1 to 10% by mass, still further preferably 1 to 10% by mass.

As the fat and oil that can be contained in the liquid food of the present invention, for example, one type or two types or more of milk fat components such as butter and raw cream, animal fats and oils such as lard and beef tallow, vegetable fats and oils, and fractionated fats and oils thereof, hydrogenated fats and oils, interesterified fats and oils and the like derived from the above fats and oils can be used in combination. Examples of vegetable fats and oils include a soybean oil, a rapeseed oil, a cottonseed oil, a corn oil, a sunflower oil, an olive oil, a safflower oil, a palm oil, a palm kernel oil, and a coconut oil. The content of the fat and oil in the liquid food of the present invention including the fats and oils in the fat and oil composition for rich taste enhancement of the present invention, in the milk component to be described later, and in the egg component is preferably 0.05 to 40% by mass, more preferably 0.05 to 30% by mass, still more preferably 0.075 to 20% by mass, still further preferably 0.1 to 10% by mass, particularly preferably 0.8 to 10% by mass, and further particularly preferably 1 to 10% by mass.

Examples of the milk component that can be contained in the liquid food of the present invention include milk, raw cream, a skimmed milk powder, a whole fat milk powder, total milk protein, whey protein, casein, sugared whole fat milk, and sugared skim milk. The content of the milk component in the liquid food of the present invention is preferably 0.01 to 20% by mass, more preferably 0.05 to 20% by mass, still more preferably 0.075 to 15% by mass, still further preferably 0.1 to 10% by mass, particularly preferably 0.5 to 10% by mass, in terms of non-fat milk solid content.

As an egg component that can be contained in the liquid food of the present invention, for example, whole egg, egg yolk, egg white, salted whole egg, salted egg yolk, salted egg white, sugared whole egg, sugared egg yolk, sugared egg white, dried whole egg, dried egg yolk, dried egg white, frozen whole egg, frozen egg yolk, frozen egg white, frozen sugared whole egg, frozen sugared egg yolk, frozen sugared egg white, enzyme-treated whole egg, enzyme-treated egg yolk, or the like can be used. One type or two types or more selected from these can be used. The content of the egg component in the liquid food of the present invention is preferably 0.01 to 20% by mass, more preferably 0.05 to 20% by mass, still more preferably 0.075 to 15% by mass, still more preferably 0.1 to 10% by mass, particularly preferably 0.5 to 10% by mass.

The amount of the fat and oil composition for rich taste enhancement of the present invention contained in the liquid food of the present invention varies depending on the desired strength of the rich taste, and from the viewpoint of producing a liquid food with sufficient rich taste, the amount is preferably 0.01 to 10% by mass, more preferably 0.1 to 10% by mass, still more preferably 0.5 to 10% by mass.

The method for producing the liquid food of the present invention is not particularly limited, except that the liquid food contains the fat and oil composition for rich taste enhancement of the present invention. The method for producing the liquid food can appropriately perform, depending on the types of the liquid foods to be produced, treatment steps and cooking steps commonly used in producing liquid foods using materials (ingredients, seasonings, etc.) commonly used in producing liquid foods.

The fat and oil composition for rich taste enhancement of the present invention can be contained in the liquid food of the present invention at any time. For example, the fat and oil composition can be contained as one of the raw materials in the production of the liquid food of the present invention, or can be added and contained before eating the liquid food.

### Examples

Hereinafter, the present invention will be described in detail with reference to Examples. However, the present invention is not limited to the following examples.

Details of the fats and oils used in the production and study of fat and oil compositions for rich taste enhancement in Examples and Comparative Examples are as follows. Note that among the fats and oils used in this study, a corn oil, a coconut oil, a palm kernel oil (PKO), and beef tallow are other fats and oils that do not fall under any of the above-described fats and oils A to G.
- Cocoa butter: the stearic acid residue content in fatty acid residue chemical composition is 37.4% by mass, the oleic acid residue content is 25.4% by mass, the lauric acid residue content is not detected (N.D.), the linoleic acid residue content is 0.7% by mass and the iodine value is 36. Moreover, SFC-25 is 35.0%, and SFC-35 is 0.1%. This fat and oil corresponds to the above-described "fat and oil A."
- Shea olein: the stearic acid residue content in fatty acid residue chemical composition is 27.9% by mass, the oleic acid residue content is 15.8% by mass, the lauric acid residue content is 0.5% by mass, the linoleic acid residue content is 9.1% by mass, and the iodine value is 66. Moreover, SFC-25 is 1.9% and SFC-35 is 0.3%. This fat and oil is a fractionated soft part oil of the shea butter, and corresponds to the above-described "fat and oil C".
- Shea stearin: the stearic acid residue content in fatty acid residue chemical composition is 59.8% by mass, the oleic acid residue content is 33.7 by mass, lauric acid residue content is N.D., the linoleic acid residue content is 2.4% by mass, and the iodine value is 37. Moreover, SFC-25 is 70.7% and SFC-35 is 6.4. This fat and oil is a fractionated hard part oil of the shea butter, and corresponds to the above-described "fat and oil C".
- Cottonseed oil: the lauric acid residue content in the fatty acid residue chemical composition is N.D., the linoleic acid residue content is 57.9% by mass, iodine value is 111, and the unsaponifiable substance content is 1.0% by mass. This fat and oil corresponds to the above-described "fat and oil D".
- Palm oil: the lauric acid residue content in the fatty acid residue chemical composition is 0.3% by mass, the linoleic acid residue content is 8.2% by mass, and the iodine value is 52. This fat and oil corresponds to the above-described "fat and oil E".
- Middle melting point portion of palm: the lauric acid residue content in the fatty acid residue chemical composition is 0.3% by mass, the linoleic acid residue content is 3.3% by mass, and the iodine value is 34. This fat and oil corresponds to the above-described "fat and oil F" .
- Palm superolein: the lauric acid residue content in the fatty acid residue chemical composition is 0.3% by mass, the linoleic acid residue content is 8.2% by mass, and the iodine value is 64. This fat and oil corresponds to the above-described "fat and oil F".
- Palm stearin: the lauric acid residue content in the fatty acid residue chemical composition is 0.4% by mass, the linoleic acid residue content is 5.0% by mass, and the iodine value is 33. This fat and oil corresponds to the above-described "fat and oil F".
- Olive oil: the lauric acid residue content in the fatty acid residue chemical composition is N.D., the linoleic acid residue content is 13.0% by mass, and the iodine value is 94. This fat and oil corresponds to the above-described "fat and oil G".

Details of the raw materials used in the production and study of the meat substitute food and the ground meat-processed food are as follows.
- Soybean protein: MEETEX K-1 (available from Showa Sangyo Co., Ltd.) It is noted that the term "treated" in Tables 2 and 4 means that the above-described soybean protein was soaked in water.
- Ground beef (lipid: 21%)
- Onion sauté: Onion hacher 60 (available from Kewpie Corporation)
- Dried bread crumb: FRY STAR SEVEN (available from FRYSTAR CO., LTD)
- Dried egg white: Dried egg white K (available from Kewpie Corporation)
- Common salt: refined salt (available from Nihonkaisui Co., Ltd.)
- Grated garlic: Grated garlic paste (available from S&B FOODS INC.)
- Nutmeg (available from S&B FOODS INC.)
- Allspice (available from S&B FOODS INC.)
- White pepper (available from S&B FOODS INC.)

<Method for producing fat and oil compositions for rich taste enhancement in Examples 1 to 12 and Comparative Examples 1 to 10>

Oils or fats in accordance with blended amounts in Table 1 were heated and melted at 65°C, then mixed, and plasticized under rapid cooling, to produce fat and oil compositions for rich taste enhancement in Examples 1 to 12 and fat and oil compositions for rich taste enhancement in Comparative Examples 1 to 10.

Hereinafter, it is noted that the fat and oil composition for rich taste enhancement in Example 1 is written as "ex-1", and the fat and oil composition for rich taste enhancement in Comparative Example 1 is written as "cex-1". This is the same in the following Examples and Comparative Examples.

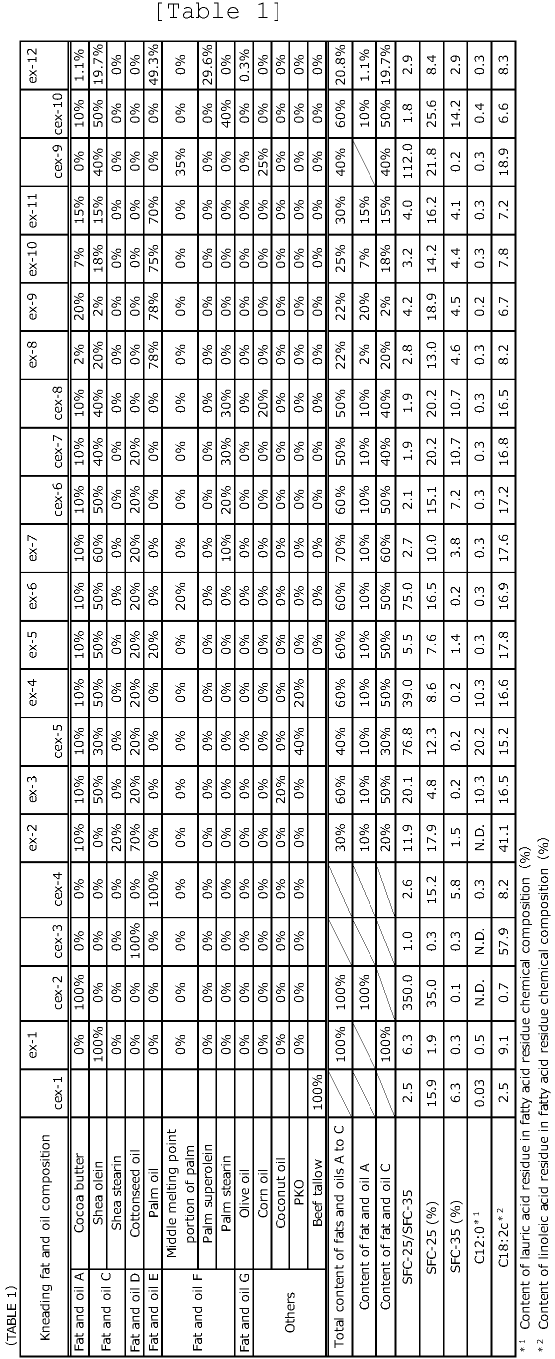

### [Study of meat substitute food]

### <Method for producing meat substitute foods ex-1 to ex-12 and meat substitute foods cex-1 to cex-10>

In accordance with blended amounts in Table 2, meat substitute foods were produced as follows.

Raw materials other than the fat and oil composition for rich taste enhancement were placed in a bowl, and kneaded and mixed by means of a mixer, and each of ex-1 to ex-12 and cex-1 to cex-10 heated until the base material became a liquid was added, and kneaded and mixed again, to produce meat substitute food base materials ex-1 to ex-12 and meat substitute food base materials cex-1 to cex-10.

The resulting meat substitute food base materials were each shaped into a circle in an amount of 30 g per piece, and heated for 13 minutes in a steam convection oven set to a temperature of 170°C and a humidity of 60%, to produce meat substitute foods ex-1 to ex-12 and meat substitute foods cex-1 to cex-10.

It is noted that numbering of the above-described meat substitute food base materials and meat substitute foods corresponds to numbering of the fat and oil compositions for rich taste enhancement used in the production of the base materials.

### <Evaluation of meat substitute food>

The "rich taste" and "workability" of the meat substitute foods ex-1 to ex-12 and the meat substitute foods cex-1 to cex-10 produced as describe above were evaluated in accordance with the following evaluation criteria.

It is noted that in the evaluation of the "rich taste", 12 panelists evaluated the rich taste as compared with the meat substitute food cex-4 as a control. Sums of resultant scores of 54 to 60, 44 to 53, 36 to 43, 18 to 35, and 0 to 17 were listed as +++, ++, +, -, and --, respectively, in Table 3.

### <<Evaluation criteria: rich taste>>

5 points: a rich taste is very stronger than that of the control.
3 points: a rich taste is stronger than that of the control.
1 point: a rich taste is slightly stronger than that of the control.
0 point: a rich taste is equal to or weaker than that of the control.

### <<Evaluation criteria: workability>>

A: the base material is less sticky and greasy, the hardness of the base material is moderate, and shaping is easy.
B: the base material is sticky and greasy, which is tolerable, the hardness of the base material is moderate, and shaping is possible.
C: the base material is sticky and greasy, and soft, and shaping is slightly difficult.
D: the base material is more sticky and greasy, and excessively soft, and shaping is difficult.

### [Table 2]

**(TABLE 2)**

| | Part by mass |
|---|---|
| Soybean protein (treated) | 55.05 |
| Soybean protein (dried) | 7.339 |
| Onion saute | 18.35 |
| Dried bread crumb | 8.257 |
| Dried egg white | 1.651 |
| Common salt | 0.826 |
| Grated garlic | 0.092 |
| Nutmeg | 0.073 |
| Allspice | 0.064 |
| White pepper | 0.046 |
| Fat and oil composition for rich taste enhancement | 8.257 |

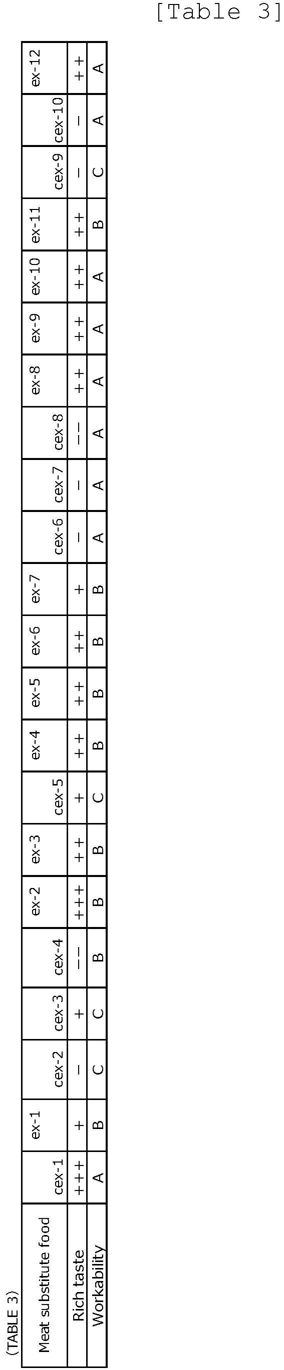

### [Study of ground meat-processed food]

### <Method for producing ground meat-processed foods ex-13 to ex-24 and ground meat-processed foods cex-11 to cex-20>

In accordance with blended amounts in Table 4, ground meat-processed foods were produced as follows.

Raw materials other than the fat and oil composition for rich taste enhancement were placed in a bowl, and kneaded and mixed by means of a mixer, and each of ex-1 to ex-12 and cex-1 to cex-10 heated until the base material became a liquid was added, and kneaded and mixed again, to produce ground meat-processed food base materials ex-13 to ex-24 and ground meat-processed food base materials cex-11 to cex-20.

The resulting ground meat-processed food base materials were each shaped into a circle in an amount of 30 g per piece, and heated for 13 minutes in a steam convection oven set to a temperature of 170°C and a humidity of 60%, to produce ground meat-processed foods ex-13 to ex-24 and ground meat-processed foods cex-11 to cex-20.

### <Evaluation of ground meat-processed food>

The "rich taste" and "workability" of the ground meat-processed foods ex-13 to ex-24 and the ground meat-processed foods cex-11 to cex-20 produced as describe above were evaluated in accordance with the above-described evaluation criteria.

### [Table 4]

**(TABLE 4)**

| | Part by mass |
|---|---|
| Soybean protein (treated) | 34 |
| Ground beef | 34 |
| Onion sauté | 14 |
| Dried bread crumb | 7.5 |
| Dried egg white | 3.5 |
| Common salt | 0.8 |
| Nutmeg | 0.1 |
| White pepper | 0.1 |
| Fat and oil composition for rich taste enhancement | 6 |

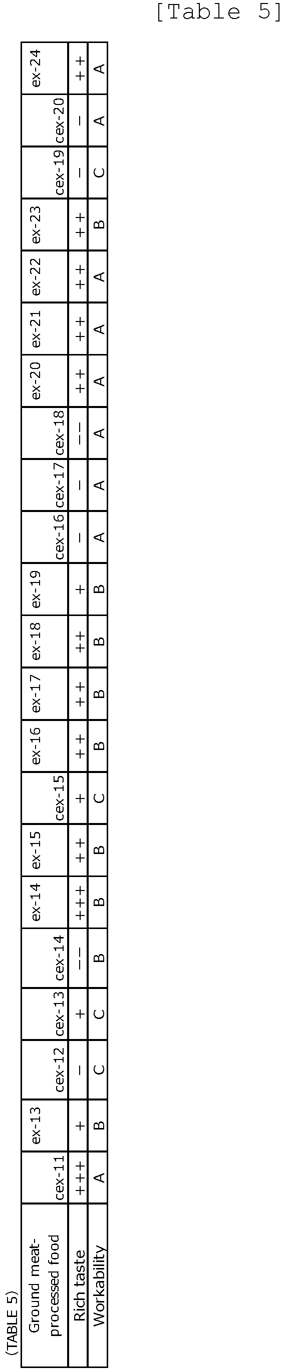

### [Study of seasoning (mayonnaise)]

### <Production and evaluation of seasonings ex-25 and ex-26 and seasoning cex-21>

In accordance with blended amounts in Table 6, seasonings (mayonnaise) were produced and evaluated as follows. In this study, a product free from the fat and oil composition was used as a control for evaluation. The fat and oil composition cex-4 and the fat and oil compositions for rich taste enhancement ex-8 and ex-12, which had been evaluated to be good in the study of meat substitute, were selected and studied.

Specifically, commercially available mayonnaise was placed at the proportion in Table 6 in a bowl, each of the fat and oil compositions cex-4, ex-8, and ex-12 was added, the base material was stirred by a whipper and eaten as it was, and the rich taste thereof was evaluated.

The evaluation of rich taste was performed in accordance with the above-described evaluation criteria. The results are shown in Table 7.

### [Table 6]

**(TABLE 6)**

| Part by mass | Cont. | ex-25 | ex-26 | cex-21 |
|---|---|---|---|---|
| Mayonnaise ("Kewpie mayonnaise" available from Kewpie Corporation) | 100 | 100 | 100 | 100 |
| Fat and oil composition for rich taste enhancement ex-8 | | 3 | | |
| Fat and oil composition for rich taste enhancement ex- 1 2 | | | 3 | |
| Fat and oil composition for rich taste enhancement cex-4 | | | | 3 |

### [Table 7]

**(TABLE 7)**

| Seasoning (mayonnaise) | ex-25 | ex-26 | cex-21 |
|---|---|---|---|
| Rich taste | + + | + + | - |

### [Study of seasoning (ketchup)]

### <Production and evaluation of seasonings ex-27 and ex-28 and seasoning cex-22>

In accordance with blended amounts in Table 8, seasonings (ketchup) were produced and evaluated as follows. In this study, a product free from the fat and oil composition was used as a control for evaluation. The fat and oil composition cex-4 and the fat and oil compositions for rich taste enhancement ex-8 and ex-12, which had been evaluated to be good in the study of meat substitute, were selected and studied.

Specifically, commercially available ketchup was placed in a bowl, each of the fat and oil compositions cex-4, ex-8, and ex-12 was added, the base material was stirred by a spatula and eaten as it was, and the rich taste thereof was evaluated.

The evaluation of rich taste was performed in accordance with the above-described evaluation criteria. The results are shown in Table 9.

### [Table 8]

**(TABLE 8)**

| Part by mass | Cont. | ex-27 | ex-28 | cex-22 |
|---|---|---|---|---|
| Ketchup ("Kagome tomato ketchup" available from KAGOME CO., Ltd.) | 100 | 100 | 100 | 100 |
| Fat and oil composition for rich taste enhancement ex-8 | | 3 | | |
| Fat and oil composition for rich taste enhancement ex- 1 2 | | | 3 | |
| Fat and oil composition for rich taste enhancement cex-4 | | | | 3 |

### [Table 9]

**(TABLE 9)**

| Seasoning (ketchup) | ex-27 | ex-28 | cex-22 |
|---|---|---|---|
| Rich taste | + + | + + | - |

### [Study of cooking oil]

### <Production and evaluation of cooking oils ex-29 and ex-30 and seasonings cex-23 to cex-25>

In accordance with blended amounts in Table 10, cooking oils (oil for saute) were produced and evaluated as follows. In this study, cex-25 was used as a control for evaluation. The fat and oil compositions for rich taste enhancement ex-8 and ex-12, which had been evaluated to be good in the study of meat substitute, were selected and studied.

As cex-23 and cex-24, beef tallow and a refined rapeseed oil, respectively, were used as they were. In accordance with Table 10, ex-29, ex-30, and cex-25 were produced as follows.

Specifically, to a refined rapeseed oil heated to 60°C, each of the fat and oil compositions for rich taste enhancement ex-8, ex-12, and cex-4 was added and sufficiently stirred, and used as a cooking oil.

Using the resulting cooking oils ex-29 and ex-30 and the cooking oils cex-23 to cex-25, the rich taste was evaluated by the following procedure.

### Evaluation Procedure

A frying pan was heated, and 15 g of any one of the cooking oils ex-29 and ex-30 and the cooking oils cex-23 to cex-25 was supplied and expanded on the entire of the frying pan. Subsequently, 3 pieces of onion sliced at a thickness of 5 mm were arranged, roasted for 3 minutes, flipped, and heated for 1 minute, and a pinch of salt was shaken on the onion, to produce onion sautés.

The rich taste of the produced onion saut6s ex-29, ex-30, cex-23 to cex-25 was evaluated in accordance with the above-described evaluation criteria. The results are shown in Table 10.

### [Table 10]

**(TABLE 10)**

| Part by mass | cex-23 | cex-24 | ex-29 | ex-30 | cex-25 (Cont.) |
|---|---|---|---|---|---|
| Beef tallow | 100 | | | | |
| Refined rapeseed oil | | 100 | 97 | 97 | 97 |
| Fat and oil composition for rich taste enhancement ex-8 | | | 3 | | |
| Fat and oil composition for rich taste enhancement ex- 1 2 | | | | 3 | |
| Fat and oil composition for rich taste enhancement cex-4 | | | | | 3 |

### [Table 11]

**(TABLE 11)**

| Cooking oil | cex-23 | cex-24 | ex-29 | ex-30 | cex-25 |
|---|---|---|---|---|---|
| Rich taste | + + + | -- | + + | + + | -- |

### [Study of cooking oil: additional study of fat and oil blend]

Fats and oils in accordance with blended amounts in Table 12 were heated and melted at 65°C, then mixed, and plasticized under rapid cooling, to anew produce fat and oil compositions for rich taste enhancement ex-31 to ex-36.

### <Production and evaluation of cooking oils ex-37 to ex-42>

In accordance with blended amounts in Table 13, cooking oils (oil for saute) were produced using the obtained fat and oil compositions for rich taste enhancement and evaluated. In this study, cex-25 was used as a control for evaluation, and the rich taste and the taste were evaluated.

The evaluation of rich taste was performed in accordance with the above-described evaluation criteria, and the evaluation of taste was performed in accordance with the following evaluation criteria.

It is noted that in the evaluation of the "taste", 12 panelists evaluated the taste. Sums of resultant scores of 54 to 60, 44 to 53, 36 to 43, 18 to 35, and 0 to 17 were listed as +++, ++, +, -, and --, respectively, in Table 14.

### <<Evaluation criteria: taste>>

5 points: a taste is comparable to the taste of the control, and an odd taste is not felt.
3 points: an odd taste is slightly felt as compared with the control, but is allowable.
1 point: an odd taste is felt as compared with the control.
0 point: an odd taste is strongly felt as compared with the control.

### [Table 12]

**(TABLE 12)**

| Fat and oil composition | | ex-31 | (ref.) ex-12 | ex-32 | ex-33 | ex-34 | ex-35 | ex-36 |
|---|---|---|---|---|---|---|---|---|
| Fat and oil A | Cocoa butter | 1.1% | 1.1% | 1.1% | 0.1% | 0.5% | 2.0% | 10.0% |
| Fat and oil C | Shea olein | 19.7% | 19.7% | 19.7% | 19.7% | 19.7% | 19.7% | 19.7% |
| | Shea stearin | 0.0% | 0.0% | 0.0% | 0.0% | 0.0% | 0.0% | 0.0% |
| Fat and oil D | Cottonseed oil | 0.0% | 0.0% | 0.0% | 0.0% | 0.0% | 0.0% | 0.0% |
| Fat and oil E | Palm oil | 49.3% | 49.3% | 49.3% | 49.3% | 49.3% | 49.3% | 49.3% |
| Fat and oil F | Middle melting point portion of palm | 0.0% | 0.0% | 0.0% | 0.0% | 0.0% | 0.0% | 0.0% |
| | Palm superolein | 29.8% | 29.6% | 29.4% | 30.6% | 30.2% | 28.7% | 20.7% |
| | Palm stearin | 0.0% | 0.0% | 0.0% | 0.0% | 0.0% | 0.0% | 0.0% |
| Fat and oil G | Olive oil | 0.1% | 0.3% | 0.5% | 0.3% | 0.3% | 0.3% | 0.3% |
| Others | Corn oil | 0.0% | 0.0% | 0.0% | 0.0% | 0.0% | 0.0% | 0.0% |
| | Coconut oil | 0.0% | 0.0% | 0.0% | 0.0% | 0.0% | 0.0% | 0.0% |
| | PKO | 0.0% | 0.0% | 0.0% | 0.0% | 0.0% | 0.0% | 0.0% |
| | Beef tallow | 0.0% | 0.0% | 0.0% | 0.0% | 0.0% | 0.0% | 0.0% |
| Total content of fats and oils A to C | | 20.8% | 20.8% | 20.8% | 19.8% | 20.2% | 21.7% | 29.7% |
| Content of fat and oil A | | 1.1% | 1.1% | 1.1% | 0.1% | 0.5% | 2.0% | 10.0% |
| Content of fat and oil C | | 19.7% | 19.7% | 19.7% | 19.7% | 19.7% | 19.7% | 19.7% |
| SFC-25/SFC-35 | | 2.9 | 2.9 | 2.9 | 2.8 | 2.8 | 3.0 | 4.0 |
| SFC-25 (%) | | 8.4 | 8.4 | 8.4 | 8.0 | 8.2 | 8.7 | 11.5 |
| SFC-35 (%) | | 2.9 | 2.9 | 2.9 | 2.9 | 2.9 | 2.9 | 2.9 |
| C12:0*¹ | | 0.4 | 0.3 | 0.3 | 0.4 | 0.4 | 0.3 | 0.3 |
| C18:2c*² | | 8.3 | 8.3 | 8.3 | 8.4 | 8.4 | 8.3 | 7.7 |

| | | | | | | | | |
|---|---|---|---|---|---|---|---|---|
| * ¹ Content of lauric acid residue in fatty acid residue chemical composition (%) * ² Content of linoleic acid residue in fatty acid residue chemical composition (%) | | | | | | | | |

### [Table 13]

**(TABLE 13)**

| Part by mass | cex-25 (Cont.) | (ref.) ex-30 | ex-37 | ex-38 | ex-39 | ex-40 | ex-41 | ex-42 |
|---|---|---|---|---|---|---|---|---|
| Refined rapeseed oil | 97 | 97 | 97 | 97 | 97 | 97 | 97 | 97 |
| Fat and oil composition for rich taste enhancement cex-4 | 3 | | | | | | | |
| Fat and oil composition for rich taste enhancement ex- 1 2 | | 3 | | | | | | |
| Fat and oil composition for rich taste enhancement ex-31 | | | 3 | | | | | |
| Fat and oil composition for rich taste enhancement ex-32 | | | | 3 | | | | |
| Fat and oil composition for rich taste enhancement ex-33 | | | | | 3 | | | |
| Fat and oil composition for rich taste enhancement ex-34 | | | | | | 3 | | |
| Fat and oil composition for rich taste enhancement ex-35 | | | | | | | 3 | |
| Fat and oil composition for rich taste enhancement ex-36 | | | | | | | | 3 |

### [Table 14]

**(TABLE 14)**

| Cooking oil | cex-25 (Cont.) | (ref.) ex-30 | ex-37 | ex-38 | ex-39 | ex-40 | ex-41 | ex-42 |
|---|---|---|---|---|---|---|---|---|
| Rich taste | -- | + + | + | + + | + | + | + + | + + + |
| Taste | + + + | + + + | + + + | + + | + + + | + + + | + + + | + + |

In Examples described above, the results of study of the fat and oil compositions for rich taste enhancement containing cocoa butter (the fat and oil A) and/or shear butter-fractionated oil (the fat and oil C) were shown. It is confirmed that the fat and oil composition for rich taste enhancement containing shea butter (the fat and oil B) achieves the object of the present invention, that is, (1) and (2) described below:
(1) the composition can be used irrespective of a food or beverage to be applied, and has improved workability; and
(2) the composition can improve the rich taste of a food or beverage.

In particular, it is confirmed that under a condition where the ratio SFC-25/SFC-35 satisfies the range of the present invention, when the content of the fat and oil A in the fat and oil composition for rich taste enhancement containing the fat and oil A is in the range of 1 to 18% by mass (particularly preferably 1 to 13% by mass), when the content of the fat and oil B in the fat and oil composition for rich taste enhancement containing the fat and oil B is in the range of 1 to 18% by mass (particularly preferably 5 to 13% by mass), or when the content of the fat and oil C in the fat and oil composition for rich taste enhancement containing the fat and oil C is in the range of 10 to 55% by mass (particularly preferably 10 to 35% by mass), the above-described objects (1) and (2) can be excellently achieved, and a food or beverage having a much better taste can be obtained.

It is confirmed that under a condition where any one or more of the oils or fats A to C are contained and the ratio SFC-25/SFC-35 satisfies the range of the present invention, when the content of the fat and oil D in the fat and oil composition for rich taste enhancement containing the fat and oil D is in the range of 10 to 80% by mass, when the content of the fat and oil E in the fat and oil composition for rich taste enhancement containing the fat and oil E is in the range of 30 to 80% by mass, when the content of the fat and oil F in the fat and oil composition for rich taste enhancement containing the fat and oil F is in the range of 6 to 40% by mass, or when the content of the fat and oil G in the fat and oil composition for rich taste enhancement containing the fat and oil G is in the range of 0.1 to 0.6% by mass, the above-described objects (1) and (2) can be especially excellently achieved, and a food or beverage having an especially excellent taste can be obtained.

## Claims

1. A fat and oil composition for rich taste enhancement comprising any one or more of the following fats and oils (A) to (C), the fat and oil composition having a ratio SFC-25/SFC-35 of a solid fat content at 25°C (SFC-25) (%) relative to a solid fat content at 35°C (SFC-35) (%) of 2.2 to 80:
(A) a cocoa butter,
(B) a shea butter, and
(C) a fractionated oil of a shea butter.

2. The fat and oil composition for rich taste enhancement according to claim 1, wherein a fatty acid residue chemical composition satisfies any one or more of the following conditions (i) and (ii):
Condition (i) a content of a lauric acid residue in the fatty acid residue chemical composition is 15% by mass or less; and
Condition (ii) a content of a linoleic acid residue in the fatty acid residue chemical composition is 5 to 45% by mass.

3. The fat and oil composition for rich taste enhancement according to claim 1 or 2, wherein a total content of the (A) to (C) fats and oils is 20 to 80% by mass.

4. The fat and oil composition for rich taste enhancement according to claim 1 or 2, comprising any one or more of the following (D) to (G):
(D) at least one selected from a cottonseed oil, a rice oil, and a rapeseed oil;
(E) a palm oil;
(F) a palm-based oil; and
(G) an olive oil.

5. The fat and oil composition for rich taste enhancement according to claim 3, comprising any one or more of the following (D) to (G):
(D) at least one selected from a cottonseed oil, a rice oil, and a rapeseed oil;
(E) a palm oil;
(F) a palm-based oil; and
(G) an olive oil.

6. The fat and oil composition for rich taste enhancement according to claim 1 or 2, wherein a continuous phase is an oil phase.

7. The fat and oil composition for rich taste enhancement according to claim 3, wherein a continuous phase is an oil phase.

8. The fat and oil composition for rich taste enhancement according to claim 4, wherein a continuous phase is an oil phase.

9. The fat and oil composition for rich taste enhancement according to claim 5, wherein a continuous phase is an oil phase.

10. A ground meat-processed food or meat substitute food using the fat and oil composition for rich taste enhancement according to claim 1.

11. A seasoning using the fat and oil composition for rich taste enhancement according to claim 1.

12. A cooking oil using the fat and oil composition for rich taste enhancement according to claim 1.

13. A liquid food using the fat and oil composition for rich taste enhancement according to claim 1.
